# EUROPÄISCHE PATENTSCHRIFT

(11) **EP 0 613 282 B1**
(45) Veröffentlichungstag und Bekanntmachung des Hinweises auf die Patenterteilung: **29.04.1998**
(21) Anmeldenummer: 93102780.9
(22) Anmeldetag: 23.02.1993
(51) Int. Cl.: H04M 3/56, H04Q 11/04

(54) **Schaltungsanordnung zur Herstellung von Konferenzverbindungen in einer digitalen Zeitmultiplex-Fernmeldevermittlungsstelle**
Circuit arrangement for setting up conference connections in a digital time multiplex telephone exchange
Circuit pour l'établissement de conférence dans une central téléphonique numérique à multiplexage temporel

(43) Veröffentlichungstag der Anmeldung: 31.08.1994
(73) Patentinhaber: SIEMENS AKTIENGESELLSCHAFT, 80333 München (DE)
(72) Erfinder: Glöss, Bernhard, Dipl.-Ing., W-8000 München 83 (DE)

(56) Entgegenhaltungen:
- EP-A- 177 465
- EP-A- 358 028
- DE-A- 3 226 430

## Beschreibung

Die Erfindung betrifft eine Schaltungsanordnung gemäß dem Oberbegriff des Patentanspruches 1.

Eine derartige Schaltungsanordnung umfaßt eine Konferenzeinheit (siehe z. B. EP-A-O 358 028), die in einer Rückschleife liegt, die den Ausgang des zyklisch einschreibbaren und wahlfrei auslesbaren Sprachspeichers der vorzugsweise Bestandteil einer Anschlußgruppe für den Anschluß von Teilnehmer- und Verbindungsleitung darstellenden Koppelanordnung der Vermittlungsstelle mit dessen Eingang verbindet.

Bei einer solchen Schaltungsanordnung sind auf den eingangsseitig und ausgangsseitig an den Sprachspeicher angeschlossenen Multiplexleitungen über die Anzahl der Zeitfächer hinaus, in denen Informationsübertragungen von und zu der Vermittlungsstelle stattfinden (Übertragungszeitfächer), zusätzlich unmittelbar aufeinanderfolgende Zeitfächer eingerichtet, die im Zusammenhang mit der Abwicklung von Konferenzverbindungen ausgenutzt werden (Konferenzzeitfächer). Entsprechend diesen zusätzlichen Zeitfächern sind im Sprachspeicher der Koppelanordnung und im zugehörigen Haltespeicher zusätzlich zu den im Zuge einer Vermittlung von Zweierverbindungen erforderlichen Sprachspeicher- bzw. Haltespeicherzellen Konferenzspeicherzellen vorgesehen. Im Zuge einer Konferenzverbindung werden bei einer solchen Schaltungsanordnung die durch wahlfreies Auslesen aus dem Sprachspeicher in Konferenzzeitfächer umgesetzten Einzelsignale der Konferenzteilnehmer nach Durchlaufen einer Einrichtung zur Linearisierung durch die Konferenzeinheit zu für die einzelnen Konferenzteilnehmer bestimmten Endsummensignalen verarbeitet, die jeweils den Eigenanteil des betreffenden Teilnehmers nicht enthalten. Nachdem diese Endsummensignale eine Einrichtung zur Kompandierung durchlaufen haben, gelangen sie in den erwähnten Konferenzzeitfächern wieder an den Sprachspeicher und werden von dort nach wahlfreiem Auslesen in den Konferenzteilnehmern jeweils zugeordnete Übertragungsfächer auf der ausgangsseitigen Multiplexleitung weiter übertragen.

Eine Alternative zum Verfahren der Linearisierung, der Summen- und Differenzbildung und der Kompandierung von Einzelsignalen jeweils zweier Konferenzteilnehmer wird in EP-A-0 177 465 beschrieben. Ein ROM, der aus einem Vorzeichen-, Summen- und Differenz-ROM besteht, verarbeitet zwei 8-Bit-parallele Eingangssignale zu einem 8-Bit-parallelen Endsummensignal.

Die Aufgabe der Erfindung besteht nun darin, die Schaltanordnung einer solchen Konferenzeinheit gemäß dem Oberbegriff des Patentanspruches 1 mit möglichst geringem schaltungstechnischen Aufwand zu gestalten.

Erfindungsgemäß geschieht dies mit Hilfe der im Kennzeichen des Patentanspruchs 1 angegebenen Maßnahmen.

Die Konferenzeinheit der erfindungsgemäßen Schaltungsanordnung enthält demnach einen Lesespeicher, mit dessen Hilfe sowohl die Funktionen der Linearisierung und der Kompandierung als auch die Funktion der Addierung durchgeführt werden. Hierzu werden diesem Lesespeicher die verschiedenen Zweiergruppen der in den aufeinanderfolgenden Konferenzzeitlagen angelieferten Einzelsignale jeweils zweier Konferenzteilnehmer als Ansteueradressen für die Leseansteuerung des das jeweilige Ergebnissignal in kompandierter Form enthaltenden Speicherplatzes zugeführt.

Nachstehehend wird die Erfindung anhand eines Ausführungsbeispieles unter Bezugnahme auf eine Zeichnung näher erläutert.

In der Zeichnung zeigen:
Figur 1 die mögliche Struktur einer digitalen Zeitmultiplex-Fernsprechvermittlungsstelle,
Figur 2 das Blockschaltbild einer eine Konferenzeinheit umfassenden Anschlußgruppe einer solchen Vermittlungsstelle,
Figur 3 eine Schaltanordnung der erfindungsgemäßen Konferenzeinheit samt deren schaltungstechnischem Umfeld,
Figur 4 ein Strukturprogramm des Betriebsablaufs dieser Konferenzeinheit.

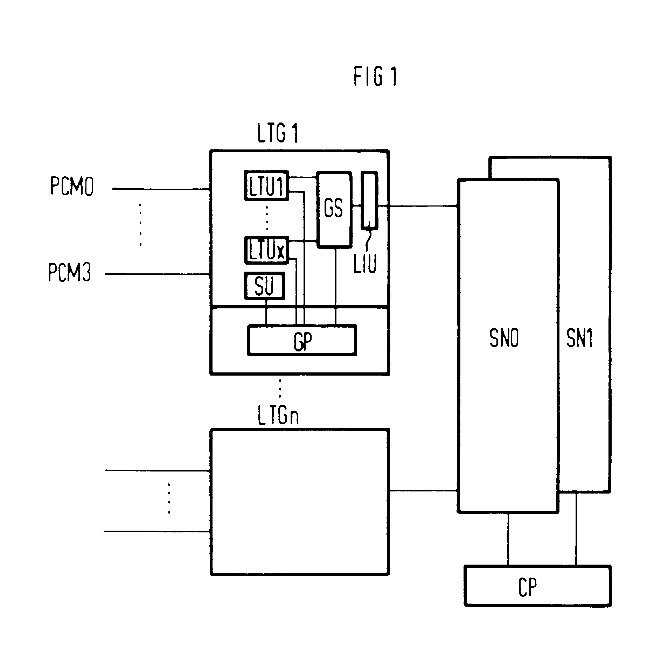

Die in Figur 1 dargestellte digitale Zeitmultiplex-Fernsprechvermittlungsstelle besteht aus einer Reihe von Anschlußgruppen LTG1 bis LTGn, einem gedoppeltem Koppelnetz SN0/SN1, sowie aus einem Koordinationsprozessor.

Die Anschlußgruppen LTG1 bis LTGn bilden die Schnittstelle zwischen der analogen oder digitalen Umgebung der Vermittlungsstelle und dem Koppelnetz. An sie sind demnach ggf. unter Zwischenschaltung einer nicht dargestellten konzentrierenden digitalen Leitungseinheit mit Teilnehmer verbindende Teilnehmerleitungen und/oder mit anderen Vermittlungsstellen verbindende Verbindungsleitungen PCM0 bis PCM3' angeschlossen.

Die Anschlußgruppen enthalten als wesentliche Bestandteile, wie bei der Anschlußgruppe LTG1 im einzelnen gezeigt, Anschlußeinheiten LTU1 bis LTUx, die ihrerseits die hier nicht dargestellten Teilnehmersätze oder Leitungssätze enthalten, ferner einen Gruppenkoppler GS, eine Schnittstelleneinheit LIU, die die Schnittstelle zwischen der Anschlußgruppe und dem Koppelfeld darstellt, eine Signaleinheit SU, sowie einen Gruppenprozessor GP, der die genannten Einheiten steuert und darüber hinaus über die Teilnehmer- oder Verbindungsleitungen empfangenen Wählinformationen verarbeitet und im Zusammenhang mit dem Aufbau und der Auslösung von Verbindungen mit dem Koordinationsprozessor CP in Steuerzeichenaustausch steht. Außerdem führt der Gruppenprozessor GP Routineprüfungen durch und übernimmt Überwachungsaufgaben.

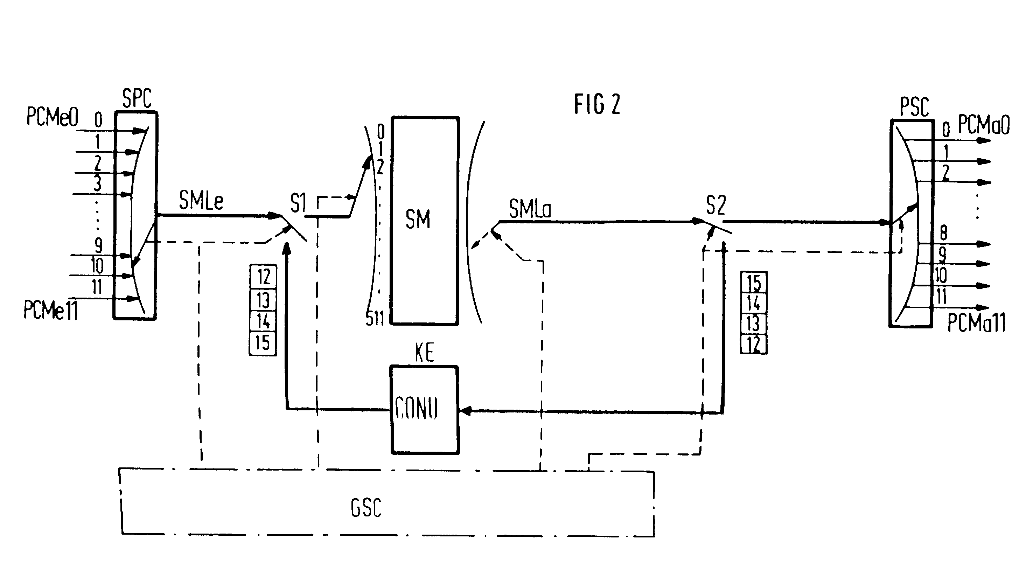

In Figur 2 ist ein hier näher interessierender Teil der Anschlußgruppe LTG gemäß FIG 1 zusammen mit einer Konferenzeinheit mehr ins einzelne gehend dargestellt.

Es ist der Anschluß von 12 PCM-Leitungen vorausgesetzt, auf denen jeweils 32 Zeitkanäle gebildet sind. Die Zweige für ankommende Übertragungsrichtung PCMe0 bis PCMe11 der PCM-Leitungen sind an einen Serien-Parallel-Wandler SPC angeschlossen, der außerdem als Multiplexer wirkt, durch den die einzelnen Bits der auf den PCM-Leitungen ankommenden PCM-Worte nach einer Serien-Parallel-Wandlung unter der Voraussetzung von jeweils 8 Bits pro PCM-Wort auf die 8 Adern des Empfangszweiges SMLe einer mehradrigen Supermultiplexleitung verteilt werden, und die durch Multiplexbildung auf dieser Supermultiplexleitung zeitlich derart verschachtelt werden, daß zunächst nacheinander die auf den PCM-Leitungen PCMe0 bis PCMe11 im Zeitkanal O übertragenen PCM-Worte nacheinander auftreten, dann die nacheinander im Zeitkanal 1 übertragenen usw. und schließlich die im Zeitkanal 32 übertragenen PCM-Worte.

Die Ablaufsteuerung des erwähnten Multiplexers arbeitet jedoch mit einem derart hohen Auslesetakt, daß außer den Zeitfächern für die PCM-Worte der 4 PCMLeitungen, die hier als Übertragungszeitfächer bezeichnet werden, zusätzliche Zeitfächer gebildet werden, nachstehend als Konferenzzeitfächer bezeichnet. Entsprechend einer angenommenen Maximalzahl von 3 Konferenzteilnehmern pro Konferenz und 64 gleichzeitig mögliche Konferenzen sind dies 64 Gruppen von jeweils 3 nacheinander auftretenden Zeitfächer.

Der erwähnte Empfangszweig SMLe der Supermultiplexleitung führt zu einem Sprachspeicher SM, der zusammen mit der entsprechenden Ansteuerung den Gruppenkoppler GS gemäß Figur 1 bildet. Der Speicher SM weist entsprechend den auf der Supermultiplexleitung gebildeten 384 Übertragungszeitfächern 384 Speicherzellen für jeweils ein PCM-Wort auf. Zusätzlich, entsprechend den erwähnten zusätzlichen Konferenzzeitfächern, weist er eine entsprechende Anzahl von weiteren Speicherzellen für jeweils ein PCM-Wort auf, die der Gruppierung der Konferenzzeitfächer entsprechende Gruppen von Speicherzellen bilden.

Das Einschreiben in den Sprachspeicher SM von dem ankommenden Zweig SMLe der Supermultiplexleitung aus erfolgt zyklisch, das Auslesen auf den abgehenden Zweig SMLa der Supermuliplexleitung dagegen wahlfrei. Auf diesem abgehenden Zweig SMLa herrschen entsprechende Zeitfachverhältnisse wie auf dem ankommenden Zweig SMLe.

Die Figur 2 zeigt ferner eine Konferenzeinheit KE, die in einer Rückführungsschleife liegt, über die bei entsprechender Schaltstellung von Umschaltern S1 und S2 der Ausgang des Sprachspeichers mit dessen Eingang verbunden ist.

Die dargestellte Anordnung steht unter dem Steuereinfluß einer Steuerung GSC, deren zentraler Teil ein Haltespeicher ist, der die Ansteueradressen für das wahlfreie Auslesen des Sprachspeichers SM liefert. Dieser Haltespeicher enthält demnach eine gleiche Anzahl von Speicherzellen wie der Sprachspeicher SM. Die Steuerung GSC hat ferner die Aufgabe, Ansteueradressen für das zyklische Einschreiben des Sprachspeichers SM sowie Steuersignale für die Betätigung der Umschalter S1 und S2 zu liefern.

Nachstehend wird kurz auf die grundlegenden Vorgänge bei der Abwicklung einer Konferenzverbindung eingegangen. Es wird hierbei angenommen, daß eine Konferenz zwischen drei Konferenzteilnehmern A, B und C bestehen soll, die Einzelsignale in Form entsprechender PCM-Worte in ihnen auf dem ankommenden Zweigen PCMe der Zeitmultiplexleitungen bzw. auf den entsprechenden Übertragungszeitfächern auf der Supermultiplexleitung SMLe für ankommende Übertragungsrichtung an den Sprachspeicher SM liefern, in dem diese, wie oben angegeben, durch zyklisches Einschreiben in den Übertragungszeitfächern zugeordneten Speicherzellen abgelegt werden. Beim wahlfreien Auslesen der betreffenden Speicherzellen erfolgt im Gegensatz zu den Verhältnissen bei einer normalen Zweierverbindung eine Umsetzung auf unmittelbar aufeinanderfolgende, auf der Supermultiplexleitung SMLa gebildete Konferenzzeitfächer einer der betreffenden Konferenz zugeordneten Gruppe von Konferenzzeitfächern. Über den Schalter S2, der während dieser Zeitspannen die dargestellte Schaltstellung einnimmt, gelangen diese Einzelsignale an die Konferenzeinheit KE. Dort werden aus jeweils zwei Signalen konferenzteilnehmerindividuelle Summen gebildet, die jeweils das Einzelsignal desjenigen Teilnehmers, für den sie bestimmt sind, nicht enthalten. Diese Summensignale gelangen über den Schalter S1 in entsprechenden aufeinanderfolgenden Konferenzzeitlagen wieder an den Eingang des Sprachspeichers SM, wo sie im Zuge des zyklischen Einschreibens in den Konferenzzeitfächern zugeordneten Speicherzellen abgelegt werden. Durch wahlfreie Ansteuerung dieser Speicherzellen erfolgt dann eine Umsetzung auf die den Konferenzteilnehmern zugeordneten, auf der Supermultiplexleitung SMLa für abgehende Übertragungsrichtung gebildeten Übertragungszeitlagen. Von dort gelangen sie über den nunmehr umgeschalteten Schalter S2 an den Parallel-Serien-Wandler PSC und von da aus an die betroffenen abgehenden Zweige PCMa0 bis PCMa11 der Zeitmultiplexleitungen.

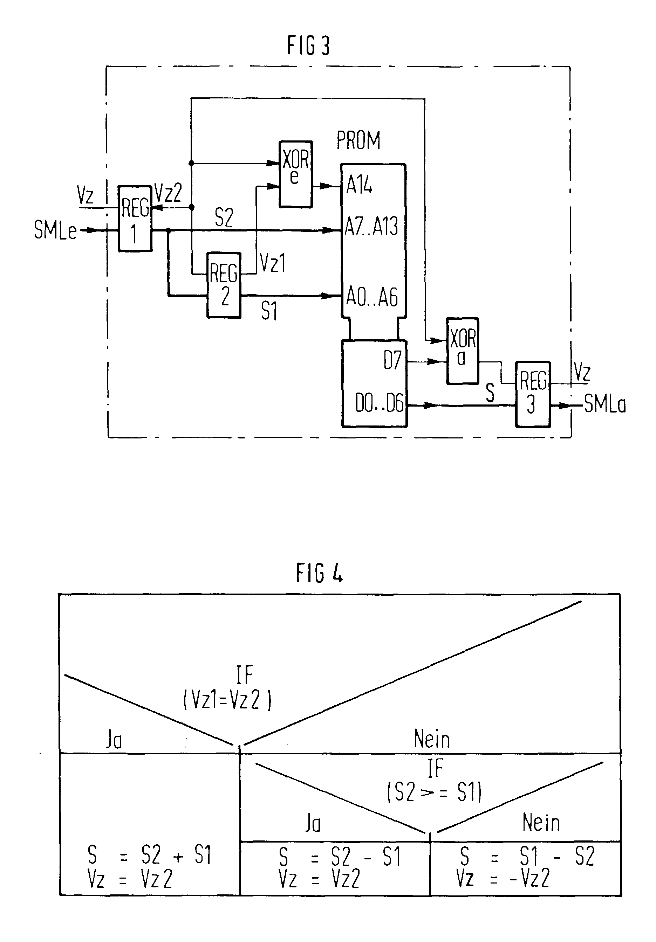

Die erfindungsgemäße Konferenzeinheit KE gemäß FIG 3 weist als zentralen Teil einen programmierbaren Lesespeicher PROM auf.

Die vom Sprachspeicher SM gemäß Figur 2 über die Supermultiplexleitung SMLe kommenden Einzelsignale, die in Zweiergruppen aufeinanderfolgender Konferenzzeitlagen auftreten, gelangen zunächst an ein erstes Register REG1. Die Vorzeichenbits VZ der Einzelsignale solcher Paare gelangen von da aus im Falle des einen Einzelsignals (Vorzeichenbit Vz1) über ein zweites Register REG2 und im Falle des zweiten Einzelsignals (Vorzeichenbit Vz2) direkt an die Eingänge eines Vergleichers, der hier in Form eines EXCLUSIV-ODER-Gliedes XOR ausgebildet ist.

Die übrigen Bits der Einzelsignale, die die Amplitudenwerte der entsprechenden Sprachsignale angeben, gelangen im Falle des ersten Einzelsignals S1 ebenfalls über das Register REG2 und im Falle des zweiten Einzelsignals S2 unmittelbar als Ansteueradresse A0...A6 bzw. A7...A13 an Steuereingänge des Steuerteils des Lesespeichers PROM.

Als weiteres Steuersignal wird dem Lesespeicher PROM das Ergebnissignal des Vergleichers XOR als Ansteuersignal A14 zugeführt.

Unter Voraussetzung von Einzelsignalen S1 und S2 in Form von PCM-Worten, die 7 Bit zur Darstellung von 128 Amplitudenstufen sowie ein Vorzeichenbit umfassen, beinhaltet der Lesespeicher 128² = 16 384 Speicherplätze für sämtliche Summenwerte in kompandierter Form, die sich aus der Addition der Summanden S1 und S2 ergeben.

Er weist ferner die gleiche Anzahl von weiteren Speicherplätzen für sämtliche Differenzwerte in kompandierter Form auf, die aus den Einzelwerten der Summanden S1 und S2 gebildet werden können.

In einer ersten Hälfte dieser weiteren Speicherplätze stehen die Differenzwerte S2-S1 und in einer zweiten Hälfte die Differenzwerte S1-S2.

Wenn der Vorzeichenvergleich Vz1/Vz2 mittels des Vergleichers XORe Gleichheit ergibt, führen die Werte der betreffenden Summanden S1 und S2 zur Ansteuerung einer entsprechenden Speicherzelle im erstgenannten, Summenwerte enthaltenden Teil des Lesespeichers PROM. Gleichzeitig mit der Ausgabe dieses Summenwertes in Form einer 7 Bit umfassenden Bitkombination an den Ausgängen D0 bis D6 erfolgt die Ausgabe eines Bereichssignalbits am Ausgang D7 des Lesespeichers.

Dieses Bereichssignalbit wird zusammen mit dem Vorzeichen Vz2 des Summanden S2 einem EXCLUSIV-ODER-Glied XORa zugeführt. Im vorliegenden Falle des Auslesens aus der ersten, Summenwerte beinhaltenden Hälfte des Lesespeichers hat das Vorzeichenauswahlbit einen derartigen Binärwert, das das EXCLUSIV-Glied immer ein Bit desselben Binärwerts wie derjenige des Vorzeichenbits Vz2 aufweist. Dieses Bit stellt zusammen mit den über die Ausgänge D0 bis D6 ausgegebenen Bits ein kompandiertes Summenwort dar, das nach Zwischenspeicherung in einem ausgangsseitigen Register REG3 in der in Zusammenhang mit Figur 2 beschriebenen Weise wieder an den Sprachspeicher SM und von dort aus in einer Übertragungzeitlage dem dritten der an der Konferenz beteiligten Konferenzteilnehmer zugeführt wird.

Wenn der Vorzeichenvergleich mittels des EXCLUSIV-ODER-Gliedes XORe eine Ungleichheit der Vorzeichen Vz1 und Vz2 der Summanden S1 und S2 ergibt, dann erfolgt das Auslesen aus der vorerwähnten zweiten Hälfte des Lesespeichers PROM, in dem die kompandierten Differenzwerte der Summanden S1 und S2 gespeichert sind.

Sofern dabei ein Speicherplatz angesteuert wird, der die kompandierte Differenz eines größeren Summanden S2 und eines kleineren Summanden S1 enthält, nimmt das gleichzeitig mit den an den Ausgängen D0 bis D6 ausgegebenen Teilwort ausgegebene Bereichssignalbit am Ausgang D7, wie oben erläutert, einen solchen Binärwert an, daß das EXCLUSIV-ODER-Glied XORa das ihm zugeführte Vorzeichenbit Vz2 in Originalform als Vorzeichenbit des Summenwortes weitergibt.

Wird hier jedoch ein Speicherplatz angesteuert, dem die Differenz eines größeren Summanden S1 und eines kleineren Summanden S2 in kompandierter Form gespeichert ist, dann nimmt das Vorzeichenbit am Ausgang D7 den entgegengesetzten Wert an mit der Folge einer Invertierung des Vorzeichenbits Vz2.

Die vorstehend geschilderten Vorgänge sind in Figur 4 nochmals in Form eines Strukturgramms dargestellt. Demnach wird zunächst die Entscheidung getroffen, ob die Vorzeichen Vz1 und Vz2 der beiden Summanden gleich sind oder nicht. Im Falle der Gleichheit wird die Summe S2 + S1 gebildet und als Vorzeichenbit Vz2 des Summanden S2 hinzugefügt. Bei Ungleichheit wird festgestellt, ob S2 größer oder gleich S1 ist. Trifft dies zu, dann wird die Differenz S2 - S1 gebildet und als Vorzeichenbit ebenfalls Vz2 hinzugefügt. Ist dagegen S2 kleiner als S1, dann wird die Differenz S1 - S2 gebildet und als Vorzeichenbit das negierte Vorzeichenbit Vz2 hinzugefügt.

## Patentansprüche

1. Schaltanordnung zur Herstellung von Konferenzverbindungen in einer digitalen Zeitmultiplex-Fernvermittlungsstelle, die in einer den Ausgang des zyklisch einschreibbaren und wahlfrei auslesbaren Sprachspeichers der Koppelanordnung, vorzugsweise Gruppenkoppelanordnung (GS) der Vermittlungsstelle, mit dessen Eingang verbindenden Rückführungsschleife liegt, ferner mit auf den eingangsseitig und ausgansseitig an den Sprachspeicher (SM) angeschlossenen Multiplexleitungen (SMLe, SMLa), auf denen über die Anzahl der Zeitfächer hinaus, in denen Informationsübertragungen von und zu der Vermitlungsstelle stattfinden (Übertragungszeitfächer), zusätzlich unmittelbar aufeinanderfolgende Zeit fächer (Konferenzzeitfächer) gebildet sind, sowie mit im Sprachspeicher und seinem zughörigen Haltespeicher zusätzlich zu dem im Zuge einer Vermittlung von Zweierverbindungen erforderlichen Sprachspeicher bzw. Haltespeicher vorgesehenen, den genannten Konferenzeitfächern zugegordneten Konferenzspeicherzellen, wobei im Zuge einer Konferenzverbindung die Konferenzeinheit auch wahlfreies Auslesen aus dem Sprachspeicher in Konferenzzeitfächer umgesetzte Einzelsignale der Konferenzteilnehmer empfängt und nach einer Linearisierung derselben aus diesen Konferenzzeitteilnehmerindividuelle Ergebnissignale bildet, die den Eigenanteil nicht enthalten und nach einer Kompandierung in entsprechenden Konferenzzeitfächern auf die eingangsseitige Multiplexleitung ausgibt, von wo aus die beim zyklischen Einschreiben in die zugeordneten zusätzlichen Speicherzellen gelangen und diese Ergebnissignale nach wahlfreiem Auslesen in den Konferenzteilnehmern zugeorneten Übertragunszeitfächern auf der ausgangseitigen Multiplexleitung weiterübertragen werden,
**dadurch gekennzeichnet,** daß für Herstellung von Konferenzverbindungen mit drei beteiligten Konferenzteilnehmern die Konferenzeinheit (KE) einen Lesespeicher (PROM) enthält, der , damit mit dessen Hilfe sowohl die Funktionen der Linearisierung und der Kompandierung als auch der Addierung der in aufeinanderfolgenden Konferenzzeitlagen angelieferten Einzelsignale jeweils zweier Konferenzteilnehmer ausgeübt werden können, einen ersten Speicherbereich, in dessen Speicherplätze alle möglichen kompandierten Summenwerte zweier Einzelsignale gespeichert sind und einen zweiten Speicherbereich aufweist, in dessen Speicherplätzen alle möglichen kompandierten Differenzwerte zweier Einzelsignale gespeichert sind, daß ein Vergleicher (XORe) vergesehen ist, dem das erste Vorzeichenbit (Vz1) des ersten Einzelsignals (S1) nach Zwischenspeicherung in zwei aufeinanderfolgenden Registern (REG1, REG2) und das zweite Vorzeichenbit (Vz2) des zweiten Einzelsignals (S2) nach Zwischenspeicherung in einem Register (REG1) zugeführt werden, und dessen Ausgangssignal darüber entscheidet, in welchem der beiden Speicherbereiche die durch die verbleibenden Bits zweier Einzelsignale (S1, S2) gebildeten Ansteueradressen als Leseadressen wirken, und daß eine Entscheidungsschaltung (XORa) vorgesehen ist, der ein zusammen mit dem aus dem Lesespeicher ausgegebenen Ergebnissignal ausgegebenes Bereichssignal (D7) zugeführt wird, das signalisiert, ob das Ergebnissignal (D0, ..., D6) dem ersten Speicherbereich bzw. einem Teil des zweiten Speicherbereichs entstammt, in dem Ergebnissignale entspechend einer Differenz zwischen einem größeren und einem kleineren Einzelsignal gespeichert sind oder ob das Ergebnissignal einem Teil des zweiten Speicherbereichs entstammt, in dem Ergebnissignale entspechend einer Differenz zwischen einem kleinerem und einem größeren Einzelsignal, gespeichert sind, sowie das Vorzeichenbit (Vz2) des zweiten Einzelsignals zugeführt wird, und die dieses Vorzeichenbit im Fall eines erstgenannten Bereichssignalwerts in Originalform und im Falle eines zweitgenannten Bereichssignalwerts in invertierter Form als Vorzeichenbit (Vz) des weiterzusendenden Ergebnissignals (S) abgibt, wobei das Vorzeichenbit (Vz) und das Ergebnissignal (S) nach Zwischenspeicherung in einem ausgangsseitigen Register (REG3) an den Sprachspeicher (SM) weitergeleitet werden.

## Claims

1. Circuit arrangement for setting up conference calls in a digital time-division multiplex telecommunications exchange which is located in a feedback loop which connects the output of the speech memory (which can be written to cyclically and can be read from randomly) of the switching arrangement, preferably a group switching arrangement (GS) in the exchange, to its input, furthermore having multiplex lines (SMLe, SMLa) which are connected on the input side and output side to the speech memory (SM) and on which lines, whose number is greater than the number of time slots, additionally immediately successive time slots (conference time slots) are formed which occur in the information transmissions from and to the exchange (transmission time slots), as well as having conference memory cells which are allocated to the said conference time slots and are provided in the speech memory and its associated holder latch in addition to the speech memory and hold memory required in the course of switching two-party calls, in which case, in the course of a conference call, the conference unit receives individual signals from the conference participants converted by random reading from the speech memory into conference time slots and, after linearization thereof, forms conference-participant-specific result signals from them, which do not contain the intrinsic element and, after companding in appropriate conference time slots, outputs these signals to the multiplex line on the input side, from where, during the cyclic writing, they pass into the associated additional memory cells, and these result signals are passed on on the multiplex line on the output side, after random reading into transmission time slots allocated to the conference participants, characterized in that, in order to set up conference calls with three conference participants involved, the conference unit (KE) contains a read-only memory (PROM) which (in order that both the functions of linearization and the companding as well as the addition of the individual signals, supplied in successive conference time slots, of in each case two conference participants can be carried out with its aid) has a first memory area (in whose memory locations all the possible companded sum values of two individual signals are stored) and a second memory area, in whose memory locations all the possible companded difference values of two individual signals are stored, in that a comparator (XORe) is provided, to which the first sign bit (Vz1) of the first individual signal (S1) is supplied after buffer storage in two successive registers (REG1, REG2), and to which the second sign bit (Vz2) of the second individual signal (S2) is supplied after buffer storage in a register (REG1), and whose output signal is used to decide which one of the two memory areas will be used for the drive addresses (which are formed by the remaining bits of two individual signals, (S1, S2W)) which are to act as read addresses, and in that a decision circuit (XORa) is provided to which an area signal (D7) is supplied, which is output together with the result signal output from the read-only memory and indicates whether the result signal (D0, ..., D6) originates from the first memory area or a part of the second memory area, and in which result signals are stored on the basis of the difference between a larger and a smaller individual signal, or whether the result signal originates from a part of the second memory area in which result signals are stored on the basis of the difference between a smaller and a larger individual signal, and the sign bit (Vz2) of the second individual signal is supplied, and which decision circuit emits this sign bit in original form (in the case of a first-mentioned area signal value) as the sign bit (Vz) of the result signal (S) to be passed on, and emits said sign bit in inverted form as the sign bit (Vz) in the case of a second-mentioned area signal value, the sign bit (Vz) and the result signal (S) being passed on to the speech memory (SM) after buffer storage in a register (REG3) on the output side.

## Revendications

1. Circuit destiné à l'établissement de communications de conférence dans un central téléphonique numérique à multiplexage temporel, se trouvant dans une boucle de réaction reliant à l'entrée la sortie de la mémoire vocale, pouvant être écrite en cycle et pouvant être lue librement, du réseau de connexion, de préférence un commutateur de groupe (GS) du central de commutation, comportant des lignes multiplex (SMLe, SMLa) qui sont raccordées en entrée et en sortie à la mémoire vocale (SM) et sur lesquelles il est formé de plus, au-delà du nombre des créneaux temporels dans lesquels des transmissions d'informations depuis et vers le central de commutation ont lieu (créneaux temporels de transmission), des créneaux temporels immédiatement suivants (créneaux temporels de conférence), comportant des cellules de mémoires de conférence qui sont prévues dans la mémoire vocale et dans sa mémoire de maintien associée en plus de la mémoire vocale et de la mémoire de maintien nécessaires au cours d'une commutation de communications à deux abonnés et qui sont associées aux créneaux temporels de conférence mentionnés, dans lequel, au cours d'une communication de conférence, l'unité de conférence reçoit des signaux individuels, convertis dans des créneaux temporels de conférence par une lecture libre dans la mémoire vocale, des abonnés de conférence, forme après une linéarisation de ces mêmes signaux et à partir de ceux-ci des signaux de résultat, indviduels aux abonnés de conférence et qui ne contiennent pas la composante propre, et délivre ces signaux après une compression dans des créneaux temporels de conférence correspondants sur la ligne multiplex en entrée, lesquels signaux de résultat arrivent à partir de là lors de l'écriture cyclique dans les cellules de mémoire supplémentaires associées et sont retransmis après lecture libre dans des créneaux temporels de transmission associés aux abonnés de conférence sur la ligne multiplex de sortie,
caractérisé par le fait que
pour établir des communications de conférence avec trois abonnés participant à la conférence, l'unité de conférence (KE) contient une mémoire morte (PROM) qui comporte, pour pouvoir mettre en oeuvre à l'aide de cette mémoire morte aussi bien les fonctions de la linéarisation et de la compression-extension que la fonction de l'addition des signaux individuels, délivrés dans des créneaux temporels de conférence successifs, de respectivement deux abonnés de conférence, une première zone de mémoire dans les emplacements de laquelle toutes les valeurs de sommes possibles compressées de deux signaux individuels sont mémorisées et une deuxième zone de mémoire dans les emplacements de laquelle toutes les valeurs de différences possibles compressées de deux signaux individuels sont mémorisées, il est prévu un comparateur (XORe) qui reçoit le premier bit de signe (Vz1) du premier signal individuel (S1) après mémorisation temporaire dans deux registres successifs (REG1, REG2) et le second bit de signe (Vz2) du second signal individuel (S2) après mémorisation dans un registre (REG1) et dont le signal de sortie décide dans laquelle des deux zones de mémoire les adresses de commande formées par les bits restants des deux signaux individuels (S1, S2) agissent comme adresses de lecture, et il est prévu un circuit de décision (XORa), auquel il est envoyé un signal de zone (D7) qui est délivré en même temps que le signal de résultat sorti de la mémoire morte et qui indique si le signal de résultat (D0 à D6) provient de la première zone de mémoire ou d'une partie de la seconde zone de mémoire dans laquelle des signaux de résultat correspondant à une différence entre un plus grand signal individuel et un plus petit signal individuel sont mémorisés ou bien si le signal de résultat provient d'une partie de la seconde zone de mémoire dans laquelle des signaux de résultat correspondant à une différence entre un plus petit signal individuel et un plus grand signal individuel sont mémorisés, et auquel il est envoyé le bit de signe (Vz2) du deuxième signal individuel, et qui délivre ce bit de signe, sous sa forme initiale dans le cas d'une première valeur de signal de zone mentionnée et sous forme inversée dans le cas d'une deuxième valeur de signal de zone mentionnée, comme bit de signe (Vz) du signal de résultat (S) à réémettre, le bit de signe (Vz) et le signal de résultat (S) étant retransmis après mémorisation temporaire dans un registre de sortie (REG3) vers la mémoire vocale (SM).
